# EUROPEAN PATENT SPECIFICATION

(11) **EP 2 628 916 B1**
(45) Date of publication and mention of the grant of the patent: **03.01.2018**
(21) Application number: 11832388.0
(22) Date of filing: 21.09.2011
(51) Int. Cl.: F02B 23/08, F02F 3/26, F02P 5/15, F02P 13/00

(54) **INTAKE PORT FUEL INJECTION ENGINE**
MOTOR MIT BRENNSTOFFEINSPRITZUNG ÜBER EINEN ANSAUGKANAL
MOTEUR À INJECTION DE CARBURANT À ORIFICE D'ADMISSION

(30) Priority: 15.10.2010 JP 2010232651
(43) Date of publication of application: 21.08.2013
(73) Proprietor: Mitsubishi Jidosha Kogyo Kabushiki Kaisha, Tokyo 108-8410 (JP)
(72) Inventor: HATA, Koji, Tokyo 108-8410 (JP); TANAKA, Dai, Tokyo 108-8410 (JP)
(74) Representative: Vossius & Partner Patentanwälte Rechtsanwälte mbB
(86) International application number: PCT/JP2011/071460
(87) International publication number: WO 2012/049950

(56) References cited:
- WO-A1-2005/038218
- DE-A1- 19 923 251
- FR-A1- 2 359 971
- JP-A- 4 287 871
- JP-A- 8 232 665
- JP-A- 10 131 755
- JP-A- H04 112 944
- JP-A- 2001 107 734

## Description

### Technical Field

The present invention relates to engines configured to inject fuel into intake ports, and more particularly, to an engine in which fuel is injected while intake valves are open.

### Background Art

As intake port fuel injection engines configured to inject fuel from fuel injection valves arranged in intake ports, an engine has been developed which is operable in an intake stroke injection mode for injecting fuel while intake valves are open.

In such an engine having the intake stroke injection mode, fuel is injected while the exhaust valves are closed and at the same time the intake valves are open, whereby discharge of fuel into the exhaust passage can be suppressed. Also, even though the fuel injection valves are arranged in the intake ports, fuel can be supplied to the interior of the combustion chamber at proper timing and with accuracy, making it possible to improve engine output and fuel efficiency, like cylinder fuel injection engines.

Meanwhile, when the engine is started in a cold state, the temperature of an exhaust gas-purifying catalytic converter arranged in the exhaust passage needs to be raised early for activation, in order to secure required exhaust gas purification performance. To increase the temperature of the exhaust gas-purifying catalytic converter, a method of retarding the ignition timing and thereby raising the exhaust gas temperature is effective, but this method is associated with a problem that combustion becomes unstable. Thus, the amount of fuel injection has to be increased in order to stabilize combustion, in which case, however, the fuel efficiency lowers and the exhaust gas purification performance possibly remains low until the exhaust gas-purifying catalytic converter is activated.

As a method of stabilizing combustion, a technique has been known in which a cavity is formed in the top surface of the piston to produce a tumble flow within the combustion chamber (see Patent Document 1). A tumble flow created in the combustion chamber makes it easier for flames to propagate inside the combustion chamber, thus promoting combustion.

WO 2005/038218 A1 relates to an internal combustion piston engine wherein a fuel mixture is fed to each combustion chamber, whereby fresh gas is fed through inlet channels and combustion gases are discharged through outlet channels which can be released by inlet valves and outlet valves.

JP 2001107734 discloses a fuel injection valve at a position facing to a combustion chamber on the intake port side of the outer edge of a cylinder on one side on the cross direction of a cylinder head and a swirl causing means to cause swirl of fuel spray in a cylinder arranged in an intake passage.

DE 199 23 251 relates to a direct fuel injection type internal combustion engine which includes a combustion chamber formed by a cylinder head having a spark plug, a fuel injector and an air intake means with a swirl control valve, a cylinder wall, and a piston head having a vaporization portion.

FR 2 359 971 and JP 4112944 also relate to a fuel injection type internal combustion engine.

JPH04287871 (A) relates to a combustion chamber which is provided at its center part with a spark plug (center plug) that is to be the center ignition. A protrusion is formed at the top face of a piston.

JPH08232665 (A) discloses a cylinder which has a pair of intake valves and a pair of exhaust valves, to arrange a spark plug in the center of a cylinder.

### Prior Art Documents

### Patent Documents

Patent Document 1: Japanese Laid-open Patent Publication No. S63-48922

### Summary of the Invention

### Problems to be Solved by the Invention

In the case of the engine having the intake stroke injection mode, however, even if an attempt is made to produce a tumble flow within the combustion chamber as in Patent Document 1, the flow of intake air from an upper region of the opening of the intake valve and the flow of intake air from a lower region of the opening collide with each other inside the combustion chamber, with the result that the air-fuel mixture is stirred up. Thus, unlike the cylinder fuel injection engine, it is difficult to realize stratified combustion, making it difficult to achieve both combustion stability and improved fuel efficiency at the time of cold start.

The present invention was made to solve the above problem, and an object thereof is to provide an intake port fuel injection engine which enables stratified combustion to take place inside a combustion chamber, thereby improving fuel efficiency and ensuring combustion stability.

### Means for Solving the Problems

To achieve the above object, the invention as recited in claims 1 and 2 provides an intake port fuel injection engine in which fuel is injected from a fuel injection valve arranged in an intake port, along a flowing direction of intake air toward either one of intake and exhaust sides of a combustion chamber while an intake valve is open, wherein a piston has a protuberance formed on a top surface thereof, the protuberance extends toward an outer edge of the piston and protrudes upward to divide an interior of the combustion chamber into a first space located forward with respect to the flowing direction of the intake air and a second space located backward with respect to the flowing direction of the intake air, and the protuberance is arranged such that the first space is smaller than the second space and that an electrode of a spark plug faces the second space.

Further, according to the invention, the fuel injection valve is arranged such that fuel is injected toward either one of those regions of an annular opening defined between the intake valve and the intake port which face the intake and exhaust sides, respectively, of the combustion chamber.

In the invention, the protuberance has opposite ends lower in height than a central portion thereof, to form guide portions allowing the intake air to be guided from the first space into the second space.

In the invention, a gap allowing the intake air to be guided from the first space into the second space is formed between each of the opposite ends of the protuberance and a peripheral wall surface of the combustion chamber.

In the invention cavities are formed, as the first and second spaces, in the top surface of the piston on both sides of the protuberance, respectively.

In the invention as recited in claim 3, the engine further comprises: an exhaust gas-purifying catalytic converter arranged in an exhaust passage of the engine; and an ignition timing control unit configured to retard ignition timing of the spark plug during cold start.

### Advantageous Effects of the Invention

According to the invention of claims 1 and 2 as fuel is injected from the fuel injection valve while the intake valve is open, intake air flows into the first space in the combustion chamber located forward with respect to the flowing direction of the intake air, while forming an air-fuel mixture rich in fuel. Since the first space is smaller than the second space, the air-fuel mixture with high fuel concentration is pushed out of the first space by the intake air introduced from the intake port subsequently to the fuel injection, and flows toward and stays in the second space.

By igniting the air-fuel mixture with the spark plug while the mixture stays in the second space, it is possible to ensure satisfactory ignitability while restraining the overall fuel consumption in the combustion chamber, because the fuel concentration is relatively high in the second space, which the electrode of the spark plug faces, and is relatively low in the first space. Stratified combustion therefore occurs, making it possible to improve fuel efficiency and ensure satisfactory combustion stability.

According to the invention fuel is injected toward either one of those regions of the annular opening defined between the intake valve and the intake port which face the intake and exhaust sides, respectively, of the combustion chamber. An air-fuel mixture with high fuel concentration can be made to flow into either one of the intake and exhaust sides of the combustion chamber.

According to the invention the opposite ends of the protuberance are lower in height than the central portion of the protuberance so that the guide portions may be formed to allow the intake air to be guided from the first space into the second space. Consequently, the air-fuel mixture with high fuel concentration can easily flow into the second space when pushed out of the first space, whereby the air-fuel mixture with high fuel concentration can easily be made to stay in the second space.

According to the invention the gap allowing the intake air to be guided from the first space into the second space is formed between each of the opposite ends of the protuberance and the inner peripheral wall surface of the combustion chamber. Thus, the air-fuel mixture with high fuel concentration easily flows into the second space when pushed out of the first space, so that the air-fuel mixture with high fuel concentration can easily be made to stay in the second space.

According to the invention the cavities are formed in the top surface of the piston, thus making it easier for the air-fuel mixture to stay in the cavities. Since the second space is also constituted by a cavity in particular, the air-fuel mixture with high fuel concentration can be made to stay in the second space more reliably.

According to the invention of claim 3, even if the ignition timing of the spark plug is retarded at the time of cold start, satisfactory combustion stability is ensured by virtue of the shape of the piston recited in claim 1. It is therefore possible to raise the exhaust gas temperature by retarding the ignition timing and thereby to quickly increase the temperature of the exhaust gas-purifying catalytic converter, whereby the exhaust gas purification performance at the time of cold start can be improved.

### Brief Description of the Drawings

FIG. 1 is a sectional view schematically showing the internal structure of an engine according to the present invention.
FIG. 2A is a front view showing the shape of a piston.
FIG. 2B is a top view showing the shape of the piston.
FIG. 2C is a right side view showing the shape of the piston.
FIG. 2D is a sectional view showing the shape of the piston.
FIG. 3 illustrates the manner of how an air-fuel mixture flows inside a combustion chamber.

### Mode for Carrying out the Invention

An embodiment of the present invention will be described below with reference to the drawings.

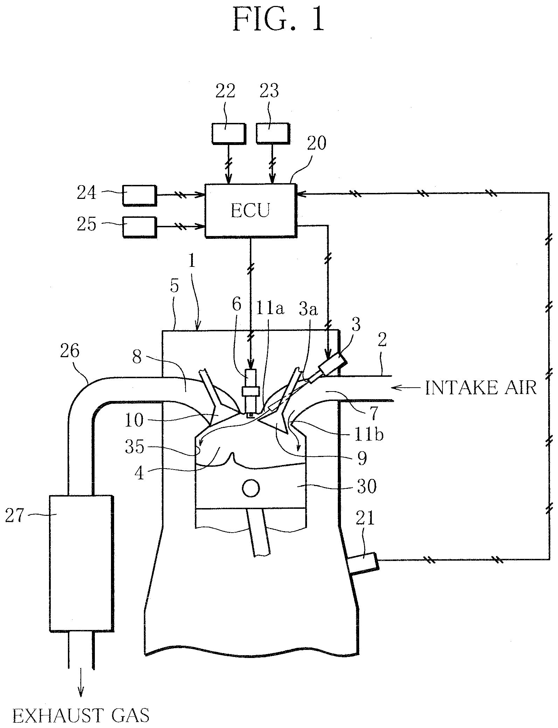

FIG. 1 is a sectional view schematically illustrating the internal structure of an intake port fuel injection engine (hereinafter referred to as engine 1) according to the present invention.

As illustrated in FIG. 1, the engine 1 according to the embodiment of the present invention is an engine having an intake stroke injection mode for injecting fuel from a fuel injection valve 3, which is arranged in an intake passage 2, toward a combustion chamber 4.

A spark plug 6 is arranged in an approximately central portion of a cylinder head 5 of the engine 1 so as to face the combustion chamber 4. The lower surface of the cylinder head 5 is inclined downward on both sides of an approximately central ridge-like line, thus defining a pent roof shape of the combustion chamber 4. Intake ports 7 open in one inclined surface forming the lower surface of the cylinder head 5, and exhaust ports 8 open in the other inclined surface. An intake valve 9 is arranged in each intake port 7, and an exhaust valve 10 is arranged in each exhaust port 8. The intake and exhaust valves 9 and 10 are driven by a valve actuating mechanism, not shown, arranged above the cylinder head 5, to open and close synchronously with rotation of the crankshaft.

The fuel injection valve 3 is mounted at a mounting angle such that fuel is injected from an injection nozzle 3a thereof along the direction of flow of intake air in the intake port 7 toward an upper region 11a (toward a first cavity 32) of an annular opening around the intake valve 9. Accordingly, when fuel is injected from the fuel injection valve 3, an air-fuel mixture with high fuel concentration flows into the combustion chamber 4 from the upper region 11a of the opening of the intake valve 9, and intake air with low fuel concentration flows into the combustion chamber 4 from a lower region 11b of the opening of the intake valve 9.

The fuel injection valve 3 is electrically connected to an ECU (Electronic Control Unit) 20. Also, the spark plug 6 is electrically connected to the ECU 20 through an ignition coil. Further, the ECU 20 is electrically connected with various sensors, such as a crank angle sensor 21 for detecting the crank angle of the engine 1, a throttle sensor 22 for detecting the opening of the throttle valve, an accelerator position sensor 23 for detecting an amount by which the accelerator pedal is depressed and a water temperature sensor 24 for detecting the temperature of cooling water, as well as with a key switch 25. Based on the information input from these sensors, the ECU 20 controls the amount of fuel to be injected from the fuel injection valve 3, fuel injection timing, ignition timing of the spark plug 6, and the like.

An exhaust passage 26 of the engine 1 is equipped with an exhaust gas-purifying catalytic converter 27 such as a three-way catalytic converter. The exhaust gas-purifying catalytic converter 27 is activated to exhibit its exhaust gas purification performance when the temperature of catalysts therein is increased.

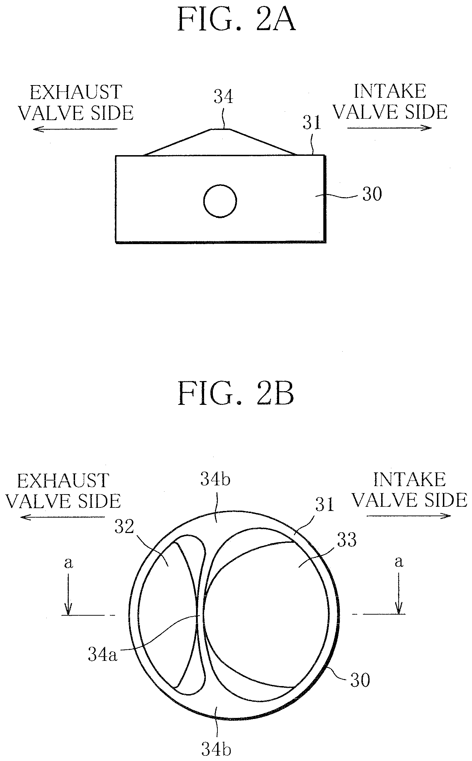

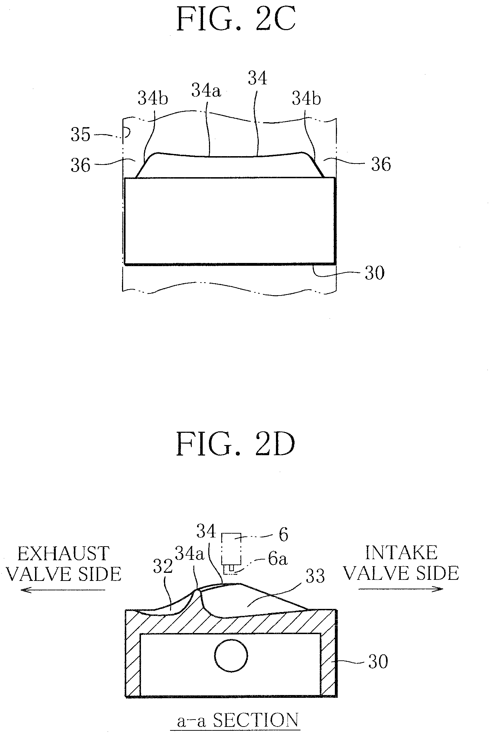

FIGS. 2A to 2D illustrate the shape of a piston 30, wherein FIG. 2A is a front view of the piston, FIG. 2B is a top view of the piston, FIG. 2C is a right side view of the piston, and FIG. 2D is a sectional view of the piston.

As illustrated in FIGS. 2A to 2D, the piston 30 of the engine 1 has a top surface 31. A first cavity 32 (first space) is formed on one side of the top surface 31 close to the exhaust valves 10, and a second cavity 33 (second space) is formed on the other side of the top surface 31 close to the intake valves 9. The first and second cavities 32 and 33 are each an elliptic recess, and a protuberance 34 protruding upward from the top surface 31 of the piston 30 is located between the first and second cavities 32 and 33. The protuberance 34 is arranged in a position offset from the center of the piston 30 toward the exhaust valves 10 and extends across the top surface 31 so as to separate the first and second cavities 32 and 33 from each other. The first cavity 32 is smaller in area than the second cavity 33, and the spark plug 6 is arranged such that an electrode 6a thereof faces the second cavity 33.

Further, as illustrated in FIG. 2C, opposite ends 34b of the protuberance 34 are obliquely cut off to form right and left gaps 36 (guide portions) in cooperation with a liner 35 so that the air-fuel mixture can pass through the gaps 36.

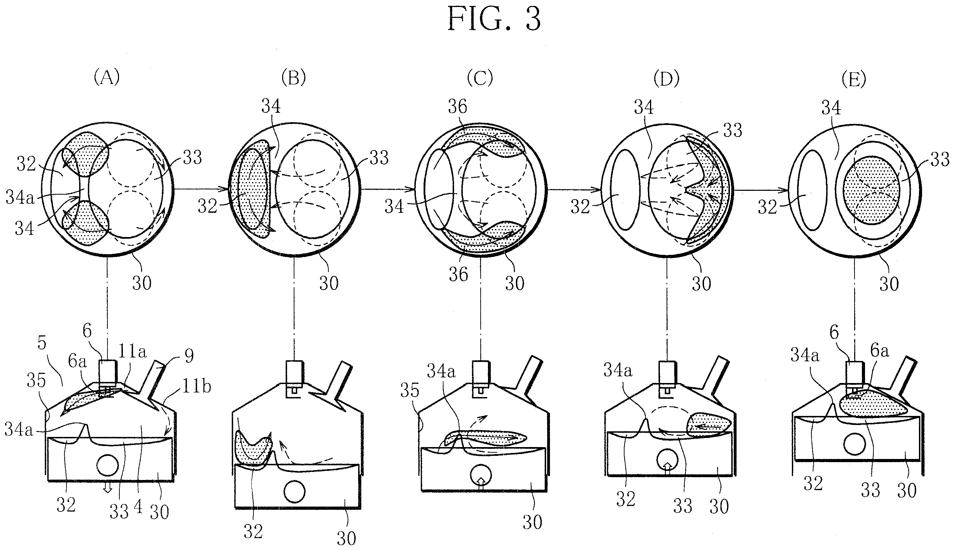

Referring now to FIG. 3, the manner of how the air-fuel mixture flows inside the combustion chamber 4 of the engine 1 equipped with the piston 30 configured as described above will be explained.

FIG. 3 illustrates how the air-fuel mixture flows within the combustion chamber 4, wherein the figures in the upper row are top views and the figures in the lower row are front views. Time elapses in the order: (A) → (B) → (C) → (D) → (E), wherein (A) indicates a state of the mixture flow at the time the piston 30 has been moved slightly downward from the top dead center after the intake stroke is started, that is, a state of the mixture immediately after the fuel injection is terminated, (B) indicates a state of the mixture at the bottom dead center, (C) and (D) indicate states of the mixture during the compression stroke, and (E) indicates a state of the mixture at the top dead center of the compression stroke. Also, in FIG. 3, each solid arrow indicates a moving direction of the air-fuel mixture with high fuel concentration that has been introduced from the upper region 11a of the opening of the intake valve 9, and each dashed arrow indicates a moving direction of intake air with low fuel concentration that has been introduced from the lower region 11b of the opening of the intake valve 9. In the figures, moreover, the hatched portions indicate the positions of the air-fuel mixture with high fuel concentration.

In the engine 1 according to the embodiment, the injection of fuel from the fuel injection valve 3 is started immediately after the start of the intake stroke, and the fuel injection is stopped at the time the piston 30 has moved slightly downward. Thus, as shown in FIG. 3(A), the air-fuel mixture with high fuel concentration flows from the upper region 11a of the opening of each intake valve into the upper region of the combustion chamber 4 along the lower surface of the cylinder head 5 and moves toward the exhaust valve 10.

As the piston 30 descends with the intake valves 9 opened, the air-fuel mixture with high fuel concentration is pushed by the intake air introduced subsequently from the intake ports 7, so that the air-fuel mixture with high fuel concentration moves downward along the liner 35.

At the bottom dead center of the piston 30, the air-fuel mixture with high fuel concentration reaches the first cavity 32, as illustrated in FIG. 3(B).

Then, the air-fuel mixture with high fuel concentration is pushed out of the first cavity 32 by the intake air introduced before the bottom dead center is reached and due to the flow inertia of the intake air. As a result, the air-fuel mixture with high fuel concentration is divided right and left by the protuberance 34, as shown in FIG. 3(C), and the divided flows of the air-fuel mixture pass through the respective gaps 36 between the protuberance 34 and the liner 35 to the intake valve side.

Subsequently, the divided flows of the air-fuel mixture with high fuel concentration, which have been detoured right and left along the liner 35, collide with each other on the intake valve side, as shown in FIG. 3(D), and enter the second cavity 33. The air-fuel mixture thus guided into the second cavity 33 is stopped from moving toward the exhaust valves 10 across the central region of the combustion chamber 4, because such movement is blocked by the protuberance 34, whereby the air-fuel mixture is prevented from again flowing into the first cavity 32.

As illustrated in FIG. 3(E), when the piston 30 is in the vicinity of the top dead center, the air-fuel mixture with high fuel concentration is located substantially in the second cavity 33. The spark plug 6 is caused to spark when the air-fuel mixture with high fuel concentration is located in the second cavity 33, so that the air-fuel mixture can be easily ignited because the air-fuel mixture with high fuel concentration stays near the electrode 6a, thus ensuring high combustion stability. Also, at the time of ignition, the fuel concentration is low in the other region of the combustion chamber 4 than the second cavity 33, for example, in the first cavity 32, whereby the overall amount of fuel used can be reduced, making it possible to improve fuel efficiency.

Thus, according to the embodiment, the piston 30 is so configured as to have the top surface 31 with the aforementioned shape, and therefore, in the engine having the intake stroke injection mode for injecting fuel into the combustion chamber 4 from the openings 11a of the intake valves 9, diffusion of the air-fuel mixture introduced into the combustion chamber 4 can be restrained by the protuberance 34.

Also, since the first cavity 32 is formed so as to be smaller in area than the second cavity 33, the air-fuel mixture with high fuel concentration staying in the first cavity 32 can be reliably pushed out into the second cavity 33 by the intake air introduced from the intake ports subsequently to the fuel injection. Further, since the second cavity 33 has a larger area than the first cavity 32, the air-fuel mixture with relatively high fuel concentration is apt to stay in the second cavity 33. Thus, at the time of ignition, the fuel concentration can be made relatively high in the second cavity 33 and relatively low in the first cavity 32, and stratified combustion can be made to take place while the air-fuel mixture with high fuel concentration is located in the vicinity of the electrode 6a of the spark plug 6. It is therefore possible to improve fuel efficiency while ensuring satisfactory combustion stability.

The ECU 20 (ignition timing control unit) may be configured to retard the ignition timing when it is judged on basis of the information detected by the key switch 25, the water temperature sensor 24 and the like that the engine 1 is started in a cold state. Generally, combustion stability lowers if the ignition timing is retarded. The engine 1 according to the embodiment, though it is a port injection engine, can ensure satisfactory combustion stability by virtue of stratified combustion achieved by the intake stroke injection and the aforementioned shape of the top surface 31 of the piston 30, and therefore, the retardation amount can be set to a sufficiently large value. Since a sufficient retardation amount can be set at the time of cold start, the exhaust gas temperature can be quickly raised to expedite activation of the exhaust gas-purifying catalytic converter 27, whereby the exhaust gas purification performance at the time of cold start can be improved.

Also, in the embodiment, the second cavity 33 may be formed so as to have a greater depth than the first cavity 32. Where the piston 30 is configured in this manner, it is easier for the air-fuel mixture with high fuel concentration to detour from the first cavity 32 to the second cavity 33 around the protuberance 34 and also to remain in the second cavity 33, with the result that stratified combustion occurs more reliably.

Further, in the above embodiment, the protuberance 34 may be inclined such that a crested portion thereof is directed toward the intake valves 9. By inclining the protuberance 34 in this manner, it is possible to make easier for the intake air to move from the first cavity 32 to the second cavity 33 and also to make more difficult for the intake air to move from the second cavity 33 to the first cavity 32. Thus, the air-fuel mixture with high fuel concentration can be collected in the second cavity 33, enabling stratified combustion to occur more reliably.

In the above embodiment, the mounting angle of the fuel injection valve 3 is set so that the fuel injected from the injection nozzle 3a may be directed to the upper region 11a of the opening of the intake valve 9. The manner of mounting the fuel injection valve 3 is not limited to this and the fuel injection valve 3 may be mounted otherwise. Specifically, the mounting angle of the fuel injection valve 3 may be set in such a manner that the fuel injected from the injection nozzle 3a is directed to the lower region 11b of the opening of the intake valve 9. In this case, the first cavity (first space) and the second cavity (second space) may be formed so as to be located on the same side as the intake valves 9 and the exhaust valves 10, respectively.

According to the present invention, at least the protuberance 34 needs to be formed, and the first and second cavities 32 and 33 may be omitted. Specifically, the protuberance 34 may be formed so as to divide the interior of the combustion chamber 4 into a space located near the exhaust valves 10, that is, located forward with respect to the flowing direction of the intake air, and a space located near the intake valves 9, that is, located backward with respect to the flowing direction of the intake air, and may be arranged such that the space located forward with respect to the flowing direction of the intake air is smaller than the other space. Also in this case, during the compression stroke, the air-fuel mixture with high fuel concentration is pushed out of the space located forward with respect to the flowing direction of the intake air and is moved to the opposite space. Then, the air-fuel mixture with high fuel concentration stays in the opposite space which the electrode 6a of the spark plug 6 faces, thus enabling stratified combustion to take place.

### Explanation of Reference Signs

- 1:: engine
- 3:: fuel injection valve
- 4:: combustion chamber
- 6:: spark plug
- 20:: ECU
- 27:: exhaust gas-purifying catalytic converter
- 30:: piston
- 32:: first cavity
- 33:: second cavity
- 34:: protuberance
- 36:: gap

## Claims

1. An intake port fuel injection engine (1) in which fuel is injected from a fuel injection valve (3) arranged in an intake port (7), along a direction of flow of intake air from the intake port (7) toward an exhaust-valve side of a combustion chamber (4) while an intake valve (9) is open such that an air-fuel mixture flowing toward the exhaust-valve side is richer than that flowing toward an intake-valve side of the combustion chamber (4), wherein a piston (30) has a protuberance (34) formed on a top surface (31) thereof, the protuberance (34) extends toward an outer edge of the piston (30) and protrudes upward to divide an interior of the combustion chamber (4) into an exhaust valve-side first space (32) located forward with respect to a fuel injection direction and an intake valve-side second space (33) located backward with respect to the fuel injection direction,
the protuberance (34) has opposite ends cut off obliquely toward the top surface of the piston (30) to form guide portions allowing the intake air to be guided from the first space into the second space (33),
the first space (32) is smaller than the second space (33), and an electrode of a spark plug (6) faces the second space (33), a gap (36) allowing the intake air to be guided from the first space (32) into the second space (33) is formed between each of the opposite ends of the protuberance (34) and a peripheral wall surface of the combustion chamber (4),
**characterised in that**
the fuel injection valve is arranged such that fuel is injected toward an upper region of an annular opening defined between the intake valve and the intake port (7), and the upper region of the opening faces the exhaust side of the combustion chamber, and
the top surface of the piston (30) has first and second cavities (32, 33) formed therein as the first and second spaces (32, 33), respectively, and located on both sides of the protuberance (34), respectively.

2. An intake port fuel injection engine (1) in which fuel is injected from a fuel injection valve (3) arranged in an intake port (7), along a direction of flow of intake air from the intake port (7) toward an intake-valve side of a combustion chamber (4) while an intake valve (9) is open such that an air-fuel mixture flowing toward the intake-valve side is richer than that flowing toward an exhaust-valve side of the combustion chamber (4), wherein
a piston (30) has a protuberance (34) formed on a top surface (31) thereof, the protuberance extends toward an outer edge of the piston (30) and protrudes upward to divide an interior of the combustion chamber (4) into an intake valve-side first space (32) located forward with respect to a fuel injection direction and an exhaust valve-side second space (33) located backward with respect to the fuel injection direction,
the protuberance (34) has opposite ends cut off obliquely toward the top surface of the piston (30) to form guide portions allowing the intake air to be guided from the first space into the second space (33),
the first space (32) is smaller than the second space (33), and an electrode of a spark plug (6) faces the second space (33),
a gap (36) allowing the intake air to be guided from the first space (32) into the second space (33) is formed between each of the opposite ends of the protuberance (34) and a peripheral wall surface of the combustion chamber (4),
**characterised in that**,
the fuel injection valve is arranged such that fuel is injected toward a lower region of an annular opening defined between the intake valve (9) and the intake port, and the lower region of the opening faces the intake side of the combustion chamber (4), and
the top surface of the piston (30) has first and second cavities (32, 33) formed therein as the first and second spaces, respectively, and located on both sides of the protuberance, respectively.

3. The intake port fuel injection engine according to any one of claims 1 to 2, **characterized by** further comprising:
an exhaust gas-purifying catalytic converter arranged in an exhaust passage of the engine; and
an ignition timing control unit configured to retard ignition timing of the spark plug when the engine is started in a cold state.

## Patentansprüche

1. Motor (1) mit Ansaugkanal-Kraftstoffeinspritzung, in dem Kraftstoff aus einem Kraftstoffeinspritzventil (3), das in einem Ansaugkanal (7) angeordnet ist, in Strömungsrichtung von Ansaugluft vom Ansaugkanal (7) zu einer Auslassventilseite einer Brennkammer (4) eingespritzt wird, während ein Einlassventil (9) offen ist, so dass ein zur Auslassventilseite strömendes Luft/Kraftstoff-Gemisch fetter als das ist, das zu einer Einlassventilseite der Brennkammer (4) strömt,
wobei ein Kolben (30) einen Vorsprung (34) hat, der auf einer Kopffläche (31) davon gebildet ist, sich der Vorsprung (34) zu einer Außenkante des Kolbens (30) erstreckt und nach oben vorsteht, um einen Innenraum der Brennkammer (4) in einen auslassventilseitigen ersten Raum (32), der im Hinblick auf eine Kraftstoff einspritzrichtung nach vorn liegt, und einen einlassventilseitigen zweiten Raum (33) aufzuteilen, der im Hinblick auf die Kraftstoffeinspritzrichtung nach hinten liegt,
der Vorsprung (34) entgegengesetzte Enden hat, die zur Kopffläche des Kolbens (30) schräg abgeschnitten sind, um Führungsabschnitte zu bilden, die der Ansaugluft ermöglichen, aus dem ersten Raum in den zweiten Raum (33) geführt zu werden,
der erste Raum (32) kleiner als der zweite Raum (33) ist und eine Elektrode einer Zündkerze (6) zum zweiten Raum (33) weist,
ein Spalt (36), der ermöglicht, die Ansaugluft aus dem ersten Raum (32) in den zweiten Raum (33) zu führen, zwischen jedem der entgegengesetzten Enden des Vorsprungs (34) und einer Umfangswandfläche der Brennkammer (4) gebildet ist,
**dadurch gekennzeichnet, dass**
das Kraftstoffeinspritzventil so angeordnet ist, dass Kraftstoff zu einem oberen Bereich einer Ringöffnung eingespritzt wird, die zwischen dem Einlassventil und dem Ansaugkanal (7) definiert ist, und der obere Bereich der Öffnung zur Auslassseite der Brennkammer weist und
die Kopffläche des Kolbens (30) einen ersten und einen zweiten Hohlraum (32, 33) hat, die darin als erster bzw. zweiter Raum (32, 33) gebildet sind und auf beiden Seiten des Vorsprungs (34) liegen.

2. Motor (1) mit Ansaugkanal-Kraftstoffeinspritzung, in dem Kraftstoff aus einem Kraftstoffeinspritzventil (3), das in einem Ansaugkanal (7) angeordnet ist, in Strömungsrichtung von Ansaugluft vom Ansaugkanal (7) zu einer Einlassventilseite einer Brennkammer (4) eingespritzt wird, während ein Einlassventil (9) offen ist, so dass ein zur Einlassventilseite strömendes Luft/Kraftstoff-Gemisch fetter als das ist, das zu einer Auslassventilseite der Brennkammer (4) strömt,
wobei ein Kolben (30) einen Vorsprung (34) hat, der auf einer Kopffläche (31) davon gebildet ist, sich der Vorsprung zu einer Außenkante des Kolbens (30) erstreckt und nach oben vorsteht, um einen Innenraum der Brennkammer (4) in einen einlassventilseitigen ersten Raum (32), der im Hinblick auf eine Kraftstoffeinspritzrichtung nach vom liegt, und einen auslassventilseitigen zweiten Raum (33) aufzuteilen, der im Hinblick auf die Kraftstoffeinspritzrichtung nach hinten liegt,
der Vorsprung (34) entgegengesetzte Enden hat, die zur Kopffläche des Kolbens (30) schräg abgeschnitten sind, um Führungsabschnitte zu bilden, die der Ansaugluft ermöglichen, aus dem ersten Raum in den zweiten Raum (33) geführt zu werden,
der erste Raum (32) kleiner als der zweite Raum (33) ist und eine Elektrode einer Zündkerze (6) zum zweiten Raum (33) weist,
ein Spalt (36), der ermöglicht, die Ansaugluft aus dem ersten Raum (32) in den zweiten Raum (33) zu führen, zwischen jedem der entgegengesetzten Enden des Vorsprungs (34) und einer Umfangswandfläche der Brennkammer (4) gebildet ist,
**dadurch gekennzeichnet, dass**
das Kraftstoffeinspritzventil so angeordnet ist, dass Kraftstoff zu einem unteren Bereich einer Ringöffnung eingespritzt wird, die zwischen dem Einlassventil (9) und dem Ansaugkanal definiert ist, und der untere Bereich der Öffnung zur Einlassseite der Brennkammer (4) weist und
die Kopffläche des Kolbens (30) einen ersten und einen zweiten Hohlraum (32, 33) hat, die darin als erster bzw. zweiter Raum gebildet sind und auf beiden Seiten des Vorsprungs liegen.

3. Motor mit Ansaugkanal-Kraftstoffeinspritzung nach Anspruch 1 oder 2, **dadurch gekennzeichnet, dass** er ferner aufweist:
einen Abgasreinigungskatalysator, der in einem Abgaskanal des Motors angeordnet ist; und
eine Zündzeit-Steuereinheit, die so konfiguriert ist, dass sie die Zündzeit der Zündkerze nach spät verstellt, wenn der Motor in einem Kaltzustand gestartet wird.

## Revendications

1. Moteur à injection de carburant (1) à orifice d'admission dans lequel le carburant est injecté par une soupape d'injection de carburant (3) agencé dans un orifice d'admission (7), le long d'une direction d'écoulement d'air d'admission, de l'orifice d'admission (7) vers un côté de soupape d'échappement d'une chambre de combustion (4) alors qu'une soupape d'admission (9) est ouverte de sorte qu'un mélange d'air - carburant s'écoulant vers le coté de la soupape d'échappement est plus riche que celui qui s'écoule vers un côté de la soupape d'admission de la chambre de combustion (4),
dans lequel :
un piston (30) a une protubérance (34) formée sur sa surface supérieure (31), la protubérance (34) s'étend vers un bord externe du piston (30) et fait saillie vers le haut pour diviser un intérieur de la chambre de combustion (4) en un premier espace (32) du côté de la soupape d'échappement, situé vers l'avant par rapport à une direction d'injection de carburant et en un second espace (33) du côté de la soupape d'admission, situé vers l'arrière par rapport à la direction d'injection de carburant,
la protubérance (34) a des extrémités opposées coupées obliquement vers la surface supérieure du piston (30) afin de former des parties de guidage permettant de guider l'air d'admission du premier espace dans le second espace (33),
le premier espace (32) est inférieur au second espace (33), et une électrode d'une bougie d'allumage (6) fait face au second espace (33), un entrefer (36) permettant à l'air d'admission d'être guidé du premier espace (32) dans le second espace (33), est formé entre chacune des extrémités opposées de la protubérance (34) et une surface de paroi périphérique de la chambre de combustion (4),
**caractérisé en ce que** :
la soupape d'injection de carburant est agencée de sorte que le carburant est injecté vers une région supérieure d'une ouverture annulaire définie entre la soupape d'admission et l'orifice d'admission (7) et la région supérieure de l'ouverture fait face au côté d'échappement de la chambre de combustion,
la surface supérieure du piston (30) a des première et seconde cavités (32, 33) formées à l'intérieur de cette dernière en tant que premier et second espaces (32, 33) respectivement, et positionnées des deux côtés de la protubérance (34) respectivement.

2. Moteur à injection de carburant (1) à orifice d'admission, dans lequel le carburant est injecté à partir d'une soupape d'injection de carburant (3) agencée dans un orifice d'admission (7), le long d'une direction d'écoulement d'air d'admission, de l'orifice d'admission (7) vers un côté de la soupape d'admission d'une chambre de combustion (4) alors qu'une soupape d'admission (9) est ouverte de sorte qu'un mélange d'air - carburant s'écoulant vers le côté de la soupape d'admission est plus riche que celui s'écoulant vers le côté de la soupape d'échappement de la chambre de combustion (4),
dans lequel :
un piston (30) a une protubérance (34) formée sur sa surface supérieure (31), la protubérance s'étend vers un bord externe du piston (30) et fait saillie vers le haut pour diviser un intérieur de la chambre de combustion (4) en un premier espace (32) du côté de la soupape d'admission, situé vers l'avant par rapport à la direction d'injection de carburant et en un second espace (33) du côté de la soupape d'échappement, situé vers l'arrière par rapport à la direction d'injection de carburant,
la protubérance (34) a des extrémités opposées coupées obliquement vers la surface supérieure du piston (30) pour former des parties de guidage permettant à l'air d'admission d'être guidé du premier espace dans le second espace (33),
le premier espace (32) est inférieur au second espace (33) et une électrode d'une bougie d'allumage (6) fait face au second espace (33),
un entrefer (36) permettant à l'air d'admission d'être guidé du premier espace (32) dans le second espace (33) est formé entre chacune des extrémités opposées de la protubérance (34) et une surface de paroi périphérique de la chambre de combustion (4),
**caractérisé en ce que** :
la soupape d'injection de carburant est agencée de sorte que le carburant injecté vers une région inférieure d'une ouverture annulaire définie entre la soupape d'admission (9) et l'orifice d'admission, et la région inférieure de l'ouverture fait face au côté d'admission de la chambre de combustion (4), et
la surface supérieure du piston (30) a des première et seconde cavités (32, 33) formées à l'intérieur de cette dernière en tant que premier et second espaces, respectivement, et situées des deux côtés de la protubérance respectivement.

3. Moteur à injection de carburant à orifice d'admission selon l'une quelconque des revendications 1 à 2, **caractérisé en ce qu'**il comprend en outre :
un convertisseur catalytique de purification de gaz d'échappement agencé dans un passage d'échappement du moteur ; et
une unité de commande de calage d'allumage configurée pour retarder le calage d'allumage de la bougie d'allumage lorsque le moteur est démarré dans un état froid.
